(19) Europäisches Patentamt
European Patent Office
Office européen des brevets

(11) **EP 4 215 055 A1**

(12) **EUROPEAN PATENT APPLICATION**
published in accordance with Art. 153(4) EPC

(43) Date of publication:
**26.07.2023 Bulletin 2023/30**

(21) Application number: **21869438.8**

(22) Date of filing: **16.09.2021**

(51) International Patent Classification (IPC):
*A23L 2/00* (2006.01)     *A23L 2/38* (2021.01)
*A23L 5/00* (2016.01)

(52) Cooperative Patent Classification (CPC):
**A23L 2/00; A23L 2/38; A23L 5/00**

(86) International application number:
**PCT/JP2021/034196**

(87) International publication number:
**WO 2022/059755 (24.03.2022 Gazette 2022/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.09.2020 JP 2020157864**

(71) Applicant: **Amano Enzyme Inc.**
**Nagoya-shi**
**Aichi 460-8630 (JP)**

(72) Inventor: **TANAKA, Ryosuke**
**Kakamigahara-shi, Gifu 509-0109 (JP)**

(74) Representative: **Müller-Boré & Partner**
**Patentanwälte PartG mbB**
**Friedenheimer Brücke 21**
**80639 München (DE)**

(54) **METHOD OF MANUFACTURING PROCESSED COCONUT MILK**

(57)    The purpose of the present invention is to provide a processing technique whereby the flavor of a coconut milk can be improved. According to this method of manufacturing a processed coconut milk including a step for treating a coconut milk with a protein deamidase, the flavor of the coconut milk can be improved.

EP 4 215 055 A1

**Description**

TECHNICAL FIELD

The present invention relates to a processing technique capable of improving flavor of coconut milk, and more specifically, the present invention relates to a method of manufacturing processed coconut milk, a flavor improving agent for coconut milk, and a flavor improving method of coconut milk.

BACKGROUND ART

Beverages containing milk and a milk component have hitherto been widely familiar, and various products have been developed. In these products, flavor of milk (milk feeling) is an important factor for forming deliciousness, and products having strong milk feeling tend to be preferred by consumers. Therefore, various processing methods for enhancing milk feeling of a beverage containing a milk component have been proposed. For example, a method of adding sucralose to a milk-containing beverage (Patent Document 1), a method of adding a seasoning obtained by processing a yeast extract and dextrin (Patent Document 2), a method of adding xylitol and a dextrin component containing reduced dextrin (Patent Document 3), and the like are known. The presence of flavor of milk feeling is also known in beverages other than the milk-containing beverage, and for example, it is known that a palm fruit extract with enhanced milk feeling or the like is obtained by removing an aroma component after the endosperm part of the palm fruit is subjected to solvent extraction (Patent Document 4).

On the other hand, for the beverages containing milk and a milk component, for example, from the viewpoint of avoiding lactose intolerance and/or milk allergy risk and the viewpoint of coping with current diversification of consumers' preference, movement to substitute plant milk has occurred.

Among plant milk, coconut milk is an ingredient used as a standard ingredient of tropical dishes, and is frequently used particularly in South East Asia. For this reason, the coconut milk is conventionally commercially available as a canned product, a frozen product, or the like. The coconut milk has attracted attention for nutritional aspects such as richness in minerals such as potassium, iron, and magnesium and cholesterol-free, and has rapidly spread in regions other than South East Asia along with an increase in consciousness of beauty and health.

The coconut milk generally has a composition in which an oil content is about 10 to 30%, a solid content is about several% to 30%, and the balance is moisture, and usually has a property of an oil-in-water type white liquid (Patent Document 5). As for the coconut milk, in order to solve problems such as formation of precipitates, separation of lipid components, and oil floating when the coconut milk is used for drink and food products, a coconut milk beverage in which 70 wt% or more of fatty acid is a saturated fatty acid having 16 to 22 carbon atoms and which uses a sucrose fatty acid ester having an HLB of 5 to 16 (Patent Document 6), a coconut milk-containing drink and food product containing a glycerol fatty acid ester and casein sodium (Patent Document 5), and the like have been proposed.

PRIOR ART DOCUMENTS

PATENT DOCUMENTS

Patent Document 1: Japanese Patent Laid-open Publication No. 2010-42021
Patent Document 2: Japanese Patent Laid-open Publication No. 2011-4673
Patent Document 3: Japanese Patent Laid-open Publication No. 2013-94131
Patent Document 4: Japanese Patent Laid-open Publication No. 2015-181354
Patent Document 5: Japanese Patent Laid-open Publication No. 2003-325147
Patent Document 6: Japanese Patent Laid-open Publication No. H8-256743

SUMMARY OF THE INVENTION

PROBLEMS TO BE SOLVED BY THE INVENTION

As for the coconut milk, a processing method for improving physical properties based on characteristic composition and properties of the coconut milk has been proposed, but a processing technique for improving flavor of the coconut milk has not been studied. As the flavor of the coconut milk, there are aroma, sweetness, milk feeling, and the like of the material itself, and these flavors support popularity as a substitute for milk beverages. On the other hand, in view of the possibility of spread and expansion of coconut milk in the future, a technique capable of improving (that is, enhancing) flavor such as aroma, sweetness, and/or milk feeling of a coconut milk material itself is desired in order to cope with diversification of consumers' preferences for flavor.

Therefore, an object of the present invention is to provide a processing technique capable of improving flavor of coconut milk.

MEANS FOR SOLVING THE PROBLEM

As a result of intensive studies of the present inventor, the present inventor has found that flavor of coconut milk can be improved by treating coconut milk using a protein deamidase whose taste improving action on plant milk has not been known. That is, the present invention provides inventions of the following aspects.

Item 1. A method of manufacturing processed coconut milk, including a step of treating coconut milk with a protein deamidase.

Item 2. The manufacturing method described in item 1, in which the protein deamidase is used in an amount of 0.1 U or more per 1 g of a soluble solid content of the coconut milk.

Item 3. A flavor improving agent for coconut milk, containing a protein deamidase.

Item 4. The flavor improving agent described in item 3, in which the flavor improvement is enhancement of sweetness.

Item 5. The flavor improving agent described in item 3 or 4, in which the flavor improvement is enhancement of milk feeling.

Item 6. The flavor improving agent described in any one of items 3 to 5, in which the flavor improvement is enhancement of coconut aroma.

Item 7. A flavor improving method of coconut milk, including a step of treating coconut milk with a protein deamidase to obtain coconut milk with improved flavor.

Item 8. The flavor improving method described in item 7, in which the coconut milk with improved flavor is coconut milk with enhanced sweetness.

Item 9. The flavor improving method described in item 7 or 8, in which the coconut milk with improved flavor is coconut milk with enhanced milk feeling.

Item 10. The flavor improving method described in any one of items 7 to 9, in which the coconut milk with improved flavor is coconut milk with enhanced coconut aroma.

ADVANTAGES OF THE INVENTION

According to the present invention, there is provided a processing technique capable of improving flavor of coconut milk.

EMBODIMENTS OF THE INVENTION

1. Method of Manufacturing Processed Coconut Milk

A method of manufacturing processed coconut milk of the present invention includes a step of treating coconut milk with a protein deamidase. Hereinafter, the method of manufacturing processed coconut milk of the present invention will be specifically described.

1-1. Coconut Milk

Coconut is a solid endosperm of the mature fruit of the coconut palm, the coconut milk may be general coconut milk, and usually, coconut milk prepared as a squeezing juice of a slurry of crushed coconut may be mentioned. Specific examples of the method for preparing coconut milk include a method in which a crushed product and/or a minced product of endosperm or copra (a dried product of endosperm of the mature fruit) of raw coconut is pulverized in water to prepare a coconut slurry, and then the coconut slurry is filtered.

As the soluble solid content of the coconut milk, the content of the soluble solid content in the coconut milk is, for example, 1 to 10 wt% and preferably 1.5 to 9.5 wt%, and the content of the protein in the coconut milk is, for example, 0.3 to 2 wt% and preferably 0.5 to 1.5 wt%.

1-2. Protein Deamidase

The type, origin, and the like of the protein deamidase used in the present invention are not particularly limited as long as the protein deamidase is an enzyme that exhibits an action of decomposing an amide group-containing side chain of a protein without cleaving peptide bonds and crosslinking the protein. Examples of the protein deamidase include a protein deamidase derived from the genus Chryseobacterium, Flavobacterium, Empedobacter, Sphingobacterium, Aureobacterium, or Myroides, and a protein glutaminase derived from the genus Chryseobacterium, which are disclosed in Japanese Patent Laid-open Publication Nos. 2000-50887 and 2001-218590, and WO 2006/075772 A. These protein deamidases may be used singly or in combination of a plurality of kinds thereof.

Among these protein deamidases, from the viewpoint of further enhancing the flavor-improving effect of the coconut milk, a protein deamidase derived from the genus Chryseobacterium is preferable, a protein glutaminase derived from the genus Chryseobacterium is more preferable, and a protein glutaminase derived from Chryseobacterium proteolyticum species is further preferable.

The protein deamidase can be prepared from a culture solution of a microorganism from which the protein deamidase is derived. Specific examples of the preparation method include a method of recovering a protein deamidase from a culture solution or a bacterial cell of the above-mentioned microorganism. For example, in the case of using a protein deamidase secreting microorganism, an enzyme can be separated and/or purified after recovering bacterial cells from the culture solution in advance by filtration, a centrifugal treatment, or the like, as necessary. In the case of using a non-protein deamidase secreting microorganism, an enzyme can be separated and/or purified after recovering bacterial cells from the culture solution in advance as necessary and then disrupting the bacterial cells by a pressurization treatment, an ultrasonic treatment, or the like to expose an enzyme. As an enzyme separation and/or purification method, a known protein separation and/or purification method can be used without particular limitation, and examples thereof include a centrifugal separation method, a UF concentration method, a salting-out method, and various chromatography methods using an ion-exchange resin or the like. The separated and/or purified enzyme can be powdered by a drying method such as freeze-drying or reduced-pressure drying, and can also be powdered using an appropriate excipient and/or drying aid in the drying method. The separated and/or purified enzyme can also be liquefied by adding an appropriate additive and performing filtration sterilization.

As the protein deamidase, a commercially available product can also be used, and examples of a preferred commercially available product include a protein glutaminase "Amano" 500 manufactured by Amano Enzyme Inc.

The titer of the protein deamidase is not particularly limited, and is, for example, 50 to 1000 U/g, 100 to 900 U/g, or 200 to 800 U/g, preferably 300 to 700 U/g, more preferably 400 to 600 U/g, and still more preferably 450 to 550 U/g.

The used amount of the protein deamidase is not particularly limited, but the used amount of the protein deamidase per 1 g of the coconut protein is, for example, 1 U or more, and from the viewpoint of further enhancing the flavor-improving effect of the coconut milk, the used amount thereof is preferably 5 U or more, more preferably 10 U or more, further preferably 20 U or more, still more preferably 100 U or more, even more preferably 200 U or more, and particularly preferably 240 U or more or 250 U or more. The upper limit of the used amount range of the protein deamidase per 1 g of the coconut protein is not particularly limited, and is, for example, 5000 U or less, 2000 U, 1000 U, 500 U or less, or 300 U or less. As for the used amount of the protein deamidase, the used amount of the protein deamidase per 1 g of the soluble solid content of the coconut milk is, for example, 0.1 U or more, and from the viewpoint of further enhancing the flavor-improving effect of the coconut milk, the used amount thereof is preferably 0.5 U or more, more preferably 1 U or more, further preferably 5 U or more, still more preferably 10 U or more, even more preferably 20 U or more or 30 U or more, particularly preferably 40 U or more or 100 U or more, and most preferably 120 U or more. The upper limit of the used amount range of the protein deamidase per 1 g of the soluble solid content of the coconut milk is not particularly limited, and is, for example, 4000 U or less, 3000 U or less, 2000 U or less, 1000 U or less, 500 U or less, 300 U or less, or 200 U or less. As for the used amount of the protein deamidase, the used amount of the protein deamidase per 100 mL of the coconut milk is, for example, 1 U or more, and from the viewpoint of further enhancing the flavor-improving effect of the coconut milk, the used amount thereof is preferably 5 U or more, more preferably 10 U or more, further preferably 20 U or more, still more preferably 100 U or more, even more preferably 200 U or more, and particularly preferably 250 U or more. The upper limit of the used amount range of the protein deamidase per 100 mL of the coconut milk is not particularly limited, and is, for example, 5000 U or less, 2000 U or less, 1000 U or less, or 500 U or less.

For the activity of the protein deamidase, benzyloxycarbonyl-L-glutaminylglycine (Z-Gln-Gly) is used as a substrate, and the amount of enzyme that liberates 1 $\mu$mol of ammonia per minute is defined as 1 unit (1 U).

1-3. Reaction Conditions, etc.

In the step of treating coconut milk with a protein deamidase, a coconut milk composition containing coconut milk and a protein deamidase is prepared by adding a protein deamidase to the coconut milk, and an enzyme treatment reaction (that is, a reaction for improving the flavor of the coconut milk) can be advanced by maintaining the coconut milk composition in a heated state.

The heating temperature (enzyme treatment reaction temperature) of the coconut milk composition is not particularly limited, and can be appropriately determined by those skilled in the art according to the optimal temperature of the enzyme to be used and the like, but is, for example, 40 to 70°C, preferably 50 to 70°C, more preferably 55 to 65°C, and further preferably 58 to 62°C.

The enzyme treatment reaction time of the coconut milk composition is not particularly limited, and may be appropriately determined according to the preparation scale of the composition, but is, for example, 0.5 hours or longer and preferably 1 hour or longer. The upper limit of the range of the enzyme treatment reaction time is not particularly limited, and is, for example, 24 hours or shorter, 12 hours or shorter, 8 hours or shorter, 6 hours or shorter, 4 hours or shorter, or 2 hours or shorter.

The enzyme treatment reaction can be terminated by an enzyme deactivation treatment with high heat. The enzyme deactivation treatment temperature is, for example, 85°C or higher and preferably 90°C or higher, and the enzyme deactivation time is, for example, 5 to 25 minutes and 10 to 20 minutes.

The coconut milk composition after the end of the enzyme treatment is subjected to a post-treatment such as filtration as necessary, and is obtained as processed coconut milk (that is, coconut milk with improved flavor).

2. Flavor Improving Agent for Coconut Milk and Flavor Improving Method of Coconut Milk

As described above, the protein deamidase can improve flavor of coconut milk. Therefore, the present invention also provides a flavor improving agent for coconut milk and a flavor improving method of coconut milk.

A flavor improving agent for coconut milk of the present invention contains a protein deamidase. In the present invention, "flavor improvement" includes "enhancement of sweetness", "enhancement of milk feeling", and/or "enhancement of coconut aroma".

A flavor improving method of coconut milk of the present invention includes a step of treating coconut milk with a protein deamidase to obtain coconut milk with improved flavor. Similarly to the above description, "with improved flavor" includes "with enhanced sweetness", "with enhanced milk feeling", and/or "with enhanced coconut aroma".

The "sweetness" is one element of five common tastes. According to the present invention, even when the coconut milk is sugar-free, the sweetness of the material can be enhanced. The "milk feeling" is a milky flavor, and is known as a flavor that may be present in a beverage containing no milk component. The "coconut aroma" is sweet aroma peculiar to coconut as a raw material, and is known to be represented by lactone (γ-nonalactone, massoia lactone, or wine lactone).

In the flavor improving agent for coconut milk and the flavor improving method of coconut milk described above, the type, used amount, and the like of the component to be used are as described in the section of "1. Method of Manufacturing Processed Coconut Milk".

EXAMPLES

Hereinafter, the present invention will be specifically described by means of Examples; however, the present invention is not to be construed as being limited to the following Examples.

The protein deamidase used in the following test examples is a protein glutaminase derived from Chryseobacterium proteolyticum (protein glutaminase "Amano" 500; titer: 500 U/g). The activity of the protein deamidase was measured by the following method.

(1) To 1 ml of a 0.2 M phosphate buffer (pH 6.5) containing 30 mM Z-Gln-Gly, 0.1 ml of an aqueous solution containing a protein deamidase was added, the mixture was incubated at 37°C for 10 minutes, and then 1 ml of a 0.4 M TCA solution was added to stop the reaction. As a blank, to 1 ml of a 0.2 M phosphate buffer (pH 6.5) containing 30 mM Z-Gln-Gly, 1 ml of a 0.4 M TCA solution was added, 0.1 ml of an aqueous solution containing a protein deamidase was further added, and the mixture was incubated at 37°C for 10 minutes.

(2) The amount of ammonia generated in the reaction solution was measured for the solution obtained in (1) using Ammonia Test Wako (FUJIFILM Wako Pure Chemical Corporation). The ammonia concentration in the reaction solution was determined from a calibration curve representing the relationship between the ammonia concentration and the absorbance (630 nm) prepared using an ammonia standard solution (ammonium chloride).

(3) The activity of the protein deamidase was calculated from the following formula with the amount of enzyme that produces 1 μmol of ammonia per minute being defined as 1 unit (1 U). In the formula, the reaction solution amount is 2.1, the enzyme solution amount is 0.1, and Df is a dilution rate of the enzyme solution. 17.03 is a molecular weight of ammonia.

[Chemical Formula 1]

Enzyme activity (U/mL)
= ammonia concentration in reaction solution (mg/L) × (1/17.03) × (reaction solution amount/ enzyme solution amount) × (1/10) × Df

Test Example 1

(1) Preparation of Coconut Milk

Two cups of coconut long (fine cut of copra) and four cups of water were mixed and pulverized with a mixer for 2 minutes to prepare a coconut slurry. The coconut slurry was filtered with a strainer bag to prepare coconut milk. The prepared coconut milk was parceled out under stirring. The content of the soluble solids in the coconut milk is about 1 to 8 wt% (about 2 wt% in the coconut milk used in the present test example), and the content of the protein in the coconut milk calculated from the content of the protein of coconut is about 1 wt%.

(2) Enzyme Treatment

A protein glutaminase (PG) was charged in an amount shown in Table 1, and reacted at 60°C for 1 hour or 2 hours. The enzyme deactivation treatment was performed at 90°C for 15 minutes to obtain processed coconut milk (Examples 1 to 4). Processed coconut milk (Comparative Example 1) was also prepared without charging PG and performing an enzyme treatment reaction at 60°C, but performing only treatment at 90°C for 15 minutes. Processed chickpea milk (content of the soluble solids: about 7 wt%, content of the protein: about 3.3 wt%) or processed soy milk (Comparative Examples 2 to 5) was also prepared in the same manner as in Comparative Example 1 and Example 4, respectively, except that chickpea milk or soy milk (that is, soybean milk) was used instead of coconut milk.

(3) Evaluation

The obtained processed coconut milk, processed chickpea milk, and processed soy milk (these are also collectively referred to as "processed plant milk") were subjected to sensory evaluation on pH (25°C) and flavor (sweetness, milk feeling, and raw material aroma). The results are shown in Table 1.

<Sensory Evaluation on Sweetness>

Sweetness was evaluated on the basis of the following criteria, using the sweetness of the processed plant milk not subjected to the PG treatment as a standard.

-: No enhancement of sweetness is observed.
+: Sweetness was enhanced.
++: Sweetness was further enhanced.

<Sensory Evaluation on Milk Feeling>

Milk feeling (milky flavor) was evaluated on the basis of the following criteria, using the milk feeling of the processed plant milk not subjected to the PG treatment as a standard.

-: No enhancement of milk feeling is observed.
+: Milk feeling was enhanced.

<Sensory Evaluation on Raw Material Aroma>

Raw material aroma (coconut aroma in the case of the processed coconut milk, chickpea aroma in the case of the processed chickpea milk, and soybean aroma in the case of the processed soy milk) was evaluated on the basis of the following criteria, using the raw material aroma of the processed plant milk not subjected to the PG treatment as a standard.

-: No enhancement of raw material aroma is observed.
+: Raw material aroma is enhanced.

[Table 1]

| | Material | PG (U) | | | Reaction condition | pH | Sweetness | Milk feeling | Raw material aroma |
|---|---|---|---|---|---|---|---|---|---|
| | | Per 100 mL of milk | Per 1 g of soluble solid content | Per 1 g of protein | | | | | |
| Comparative Example 1 | Coconut milk | 0 | 0 | 0 | | 6.34 | Standard | Standard | Standard |
| Example 1 | Coconut milk | 50 | About 25 | About 50 | 60°C - 1 hr | 6.26 | + | + | + |
| Example 2 | Coconut milk | 50 | About 25 | About 50 | 60°C - 2 hr | 6.25 | + | + | + |
| Example 3 | Coconut milk | 250 | About 125 | About 250 | 60°C - 1 hr | 6.11 | ++ | + | + |
| Example 4 | Coconut milk | 250 | About 125 | About 250 | 60°C - 2 hr | 6.1 | ++ | + | + |
| Comparative Example 2 | Chickpea milk | 0 | 0 | 0 | | 6.32 | Standard | Standard | Standard |
| Comparative Example 3 | Chickpea milk | 250 | About 35.5 | About 75.5 | 60°C - 2 hr | 6.13 | - | - | - |
| Comparative Example 4 | Soy milk | 0 | 0 | 0 | | - | Standard | Standard | Standard |
| Comparative Example 5 | Soy milk | 250 | 20.8 | 50 | 60°C - 2 hr | - | - | - | - |

As shown in Table 1, by the protein glutaminase treatment of the coconut milk (Examples 1 to 4), as compared with a case where the coconut milk was not treated with a protein glutaminase (Comparative Example 1), enhancement of sweetness, enhancement of milk feeling, and enhancement of coconut aroma were observed, and a particularly remarkable effect of improving flavor was observed. On the other hand, in the case of the chickpea milk and the soy milk (Comparative Examples 2 and 3 and Comparative Examples 4 and 5), the protein glutaminase treatment did not enhance any of sweetness, milk feeling, and raw material aroma, and no effect of improving flavor was observed.

**Claims**

1. A method of manufacturing processed coconut milk, comprising a step of treating coconut milk with a protein deamidase.

2. The manufacturing method according to claim 1, wherein the protein deamidase is used in an amount of 0.1 U or more per 1 g of a soluble solid content of the coconut milk.

3. A flavor improving agent for coconut milk, comprising a protein deamidase.

4. The flavor improving agent according to claim 3, wherein the flavor improvement is enhancement of sweetness.

5. The flavor improving agent according to claim 3 or 4, wherein the flavor improvement is enhancement of milk feeling.

6. The flavor improving agent according to any one of claims 3 to 5, wherein the flavor improvement is enhancement of coconut aroma.

7. A flavor improving method of coconut milk, comprising a step of treating coconut milk with a protein deamidase to obtain coconut milk with improved flavor.

8. The flavor improving method according to claim 7, wherein the coconut milk with improved flavor is coconut milk with enhanced sweetness.

9. The flavor improving method according to claim 7 or 8, wherein the coconut milk with improved flavor is coconut milk with enhanced milk feeling.

10. The flavor improving method according to any one of claims 7 to 9, wherein the coconut milk with improved flavor is coconut milk with enhanced coconut aroma.

## INTERNATIONAL SEARCH REPORT

| International application No. |
| --- |
| **PCT/JP2021/034196** |

### A. CLASSIFICATION OF SUBJECT MATTER

*A23L 2/00*(2006.01)i; *A23L 2/38*(2021.01)i; *A23L 5/00*(2016.01)i
FI:　A23L2/00 B; A23L5/00 J; A23L2/38 C

According to International Patent Classification (IPC) or to both national classification and IPC

### B. FIELDS SEARCHED

Minimum documentation searched (classification system followed by classification symbols)

A23L2/00; A23L2/38; A23L5/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

JSTPlus/JMEDPlus/JST7580 (JDreamIII); CAplus/MEDLINE/EMBASE/BIOSIS/FSTA/AGRICOLA (STN)

### C. DOCUMENTS CONSIDERED TO BE RELEVANT

| Category* | Citation of document, with indication, where appropriate, of the relevant passages | Relevant to claim No. |
| --- | --- | --- |
| X | WO 2020/171105 A1 (AMANO ENZYME INC) 27 August 2020 (2020-08-27) claims, paragraphs [0015], [0023]-[0025] | 1-2 |
| A | | 3-10 |
| X | WO 2020/171106 A1 (AMANO ENZYME INC) 27 August 2020 (2020-08-27) claims, paragraphs [0013], [0022]-[0024] | 1-2 |
| A | | 3-10 |
| A | TEMTHAWEE, W. et al. Flavor binding property of coconut protein affected by protein-glutaminase: Vanillin-coconut protein model. LWT - Food Science and Technology., 30 May 2020, vol. 130, 109676, pp. 1-7, https://doi.org/10.1016/j.lwt.2020.109676 abstract, conclusion | 1-10 |
| A | KUNARAYAKUL, S. et al. Optimization of coconut protein deamidation using protein-glutaminase and its effect on solubility, emulsification, and foaming properties of the proteins. Food Hydrocolloids., 2018, vol. 79, pp. 197-207, https://doi.org/10.1016/j.foodhyd.2017.12.031 abstract | 1-10 |

☑ Further documents are listed in the continuation of Box C. ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **01 November 2021** | **16 November 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2021/034196**

C.    DOCUMENTS CONSIDERED TO BE RELEVANT

| Category* | Citation of document, with indication, where appropriate, of the relevant passages | Relevant to claim No. |
|---|---|---|
| A | US 3857967 A (KIKKOMAN SHOYU CO., LTD.) 31 December 1974 (1974-12-31) | 1-10 |

Form PCT/ISA/210 (second sheet) (January 2015)

INTERNATIONAL SEARCH REPORT
Information on patent family members

International application No.

**PCT/JP2021/034196**

| Patent document cited in search report | | | Publication date (day/month/year) | Patent family member(s) | Publication date (day/month/year) |
|---|---|---|---|---|---|
| WO | 2020/171105 | A1 | 27 August 2020 | (Family: none) | |
| WO | 2020/171106 | A1 | 27 August 2020 | (Family: none) | |
| US | 3857967 | A | 31 December 1974 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010042021 A
- JP 2011004673 A
- JP 2013094131 A
- JP 2015181354 A
- JP 2003325147 A
- JP H8256743 A
- JP 2000050887 A
- JP 2001218590 A
- WO 2006075772 A